**Europäisches Patentamt**

**European Patent Office**

**Office européen des brevets**

(19)

(11) Veröffentlichungsnummer: **0 027 997 B2**

(12)

# NEUE EUROPÄISCHE PATENTSCHRIFT

(45) Veröffentlichungstag der neue Patentschrift:
**12.04.95**

(51) Int. Cl.⁶: **C09C 1/02**, D21H 19/38

(21) Anmeldenummer: **80106420.5**

(22) Anmeldetag: **21.10.80**

(54) **Mineralischer Füllstoff, insbesondere Calciumcarbonat für Farben und Papierbeschichtungsmassen.**

(30) Priorität: **29.10.79 DE 2943652**

(43) Veröffentlichungstag der Anmeldung:
**06.05.81 Patentblatt 81/18**

(45) Bekanntmachung des Hinweises auf die Patenterteilung:
**27.07.88 Patentblatt 88/30**

(45) Bekanntmachung des Hinweises auf die Entsheidung über den Einspruch:
**12.04.95 Patentblatt 95/15**

(84) Benannte Vertragsstaaten:
**AT BE DE FR GB IT NL SE**

(56) Entgegenhaltungen:
**FR-A- 2 418 263**

(73) Patentinhaber: **Plüss-Staufer AG**

**CH-4665 Oftringen (CH)**

(72) Erfinder: **Delfosse, Pierre**
**Court Evasion 2000**
**22, Rue Emerian**
**F-75000 Paris 15è (FR)**
Erfinder: **Strauch, Dieter**
**Kanalweg 24**
**CH-4800 Zofingen (CH)**

(74) Vertreter: **Reinhard, Horst, Dr. et al**
**Patentanwälte**
**REINHARD . SKUHRA . WEISE,**
**Postfach 44 01 51**
**D-80750 München (DE)**

EP 0 027 997 B2

**Beschreibung**

Die vorliegende Erfindung betrifft ein Verfahren zur Herstellung eines mineralischen Füllstoffs, insbesondere eines natürlichen Calciumcarbonats, für Farben und Papierbeschichtungsmassen.

Bei der Zerkleinerung mineralischer Füllstoffe, wie Erdalkalicarbonate, Kaolin, Talcum und Baryt, fallen Teilchen in einem verhältnismäßig breiten Gaussschen Bereich der Korngrößenverteilung an, d.h. mit sehr unterschiedlichen Durchmessern.

Für gewisse Anwendungsfälle ist ein weiter Korngrößenbereich wünschenswert, insbesondere wenn es sich um Überzugs-, Mastix- und Harzmassen handelt, die eine große Teilchendichte haben sollten, d.h. ein geringes Hohlraumvolumen zwischen den Teilchen. Allerdings handelt es sich hierbei um Anwendungsfälle für verhältnismäßig grobe mineralische Füllstoffe, bei denen die Korngrößenverteilung in einem Bereich von 5 $\mu$m bis zu einigen Millimetern reicht.

Während man im Wege der Druckzerkleinerung Teilchengrößen unterhalb 5 $\mu$m erreicht, erstreckt sich die Verteilung der erhaltenen Teilchengrößen, je nach Art des zerkleinerten Stoffs, von 5 $\mu$m bis zu hochfeinen Teilchen, die kleiner sind als 0,1 $\mu$m, nämlich 0,05 $\mu$m, Der größte Teil der erhaltenen Produkte ergibt jedoch Korngrößenverteilungen, die etwa dem Gesetz der Wahrscheinlichkeit folgend und der Gleichung entsprechen:

$$y = a \cdot e^{-U^2(d-dm)^2} \tag{1}$$

wobei

y = die Häufigkeit der Durchmesser von Teilchen mit einem Durchmesser d
a = eine Konstante entsprechend dem Maximalwert von y
dm = der mittlere Durchmesser
U = der Koeffizient der Gleichheit.

Für viele Anwendungsfälle, wie Glanzfarben, Streichpapiere und Kunststoffe ist es wünschenswert, den höchstmöglichen Feinheitsgrad der mineralischen Füllstoffteilchen zu erreichen, um damit folgenden Zielen näherzukommen. Einer Verbesserung des Oberflächenzustands, einer Verbesserung des Ganzes, einer Erhöhung des mechanischen Widerstandes der Kunststoffgemische.

Aus diesem Grund sind bereits zahlreiche Versuche vorgenommen worden, um die Zerkleinerungstechniken zu verbessern und hochfeine mineralische Füllstoffe zu erzeugen, die beispielsweise 90-100% an Teilchen kleiner als 5 $\mu$m enthalten. Unter diesen Produkten werden diejenigen auf natürlicher Calciumcarbonatbasis heutzutage in Glanzfarben und Streichpapieren als teilweiser Ersatz von Kaolin verwendet.

Beim gegenwärtigen Stand des Wissens wird davon ausgegangen, daß der Glanz von Farben und Streichpapieren um so höher wird, je größer die Feinheit eines verwendeten Pigments oder eines mineralischen Füllstoffs ist, was auch völlig logisch erscheint.

Aus ≪ Paper Coating Pigments ≫, Tappi Monograph Series, No. 20 (1958), S. 2, 3, 24, 40, 81 und 102 und ≪ Paper Coating Pigments ≫, Tappi Monograph Series, No. 38 (1976), S. 37 bis 68, insbes. S. 41 Fig. 4.3. und Fig. 4.4., S. 42 Abs. 1 und Fig. 4.8., S. 44 letzter Absatz bis S. 46 Abs. 1, S. 51 Abs. 1, S. 60 Tabelle 4.3. und S. 61 letzter Absatz bis S. 62 Abs. 1 sind ebenfalls bereits mineralische Füllstoffe bekannt. Diese enthalten wesentliche Anteile an Partikeln unter 1 $\mu$m, was der vorstehend erwähnten Annahme entspricht, daß der Glanz von Farben und Streichpapieren um so höher sei, je größer die Feinheit des verwendeten Füllstoffs ist.

Im Gegensatz dazu ist jedoch in der DE-A-28 08 425 offenbart worden, daß die hochfeinen Partikel, deren Größe unter 0.2 $\mu$m liegt, einen negativen Einfluß auf den Glanz der Farben und Streichpapiere haben. Es ergeben sich jedoch weitere Nachteile gleichzeitig mit der Erhöhung der spezifischen Oberfläche, z. B. ein hoher Bedarf an Bindemittel und erhöhte Viskosität im Fall von Farben und Streichpapieren und eine Verringerung der dielektrischen Eigenschaften im Fall gewisser Kunststoffe, wie Polyvinylchlorid oder vernetztem Polyäthylen.

Aufgabe der vorliegenden Erfindung ist es, diese Nachteile zu vermeiden und ein Verfahren zur Herstellung eines mineralischen Füllstoffs mit wesentilch verbesserten Eigenschaften zu schaffen. Diese Aufgabe wird erfindungsgemäß durch ein Verfahren gelöst, das dadurch gekennzeichnet ist, daß das Ausgangsmaterial durch Naßzerkleinerung ohne Dispergiermittel und bei einer Feststoffkonzentration von unter 60 Gew.% so zerkleinert wird, daß das Verhältnis

$$\frac{\text{Gew.\% Teilchen} < 1 \ \mu m}{\text{Gew.\% Teilchen} < 0.2 \ \mu m} = R = 4 - 5$$

ist und daß mindestens 93 Gew.% der Teilchen kleiner 2 μm sind und daß die zerkleinerte Suspension filtriert und der ca. 20 % Wasser enthaltende Filterkuchen entweder getrocknet oder durch Hinzufügen eines Dispergiermittels in eine Suspension mit niedriger Viskosität übergeführt wird. Vorzugsweise liegt der R-Wert in der Nähe von 5.

Erfindungsgemäß wurde festgestellt, daß das Verhältnis

$$\frac{\text{Gew.-\% Teilchen} < 1 \ \mu m}{\text{Gew.-\% Teilchen} < 0.2 \ \mu m} = R$$

einen beträchtlichen Einfluß auf die Eigenschaften des mineralischen Füllstoffs hat. Optimale Eigenschaften werden bei Werten von R zwischen 4 und 5erzielt. Insbesondere ermöglichen solche mineralischen Füllstoffe, glänzende Oberflächen im Fall von Farben und Streichpapieren zu erhalten.

Bei dem größten Teil der gegenwärtig verwendeten Mineralstoffe, wie natürlichen Calciumcarbonaten (Kreiden oder Kalkspaten) liegt das Verhältnis R zwischen 1,5-3,5. Ein Calciumcarbonat, welches beispielsweise 99 Gew.-% Teilchen kleiner als 2 μm und 75% Teilchen kleiner als 1 μm enthält, weist 25 % und mehr an Teilchen auf, die kleiner sind als 0,2 μm, d. h. daß es ein Verhältnis von R = 3 hat.

Sehr gute Ergebnisse werden erzielt, wenn R = 5 ist.

Die Gesetze, die die Erscheinungen des Zerkleinerungsprozesses bestimmen, sind derart, daß je mehr der Prozentsatz an Teilchen, die kleiner sind als 1 μm, zunimmt, um so stärker auch der Prozentsatz an Teilchen wächst, die kleiner sind als 0,2 μm. Trotzdem ist es möglich, die Zerkleinerungsbedingungen so zu steuern, daß der Prozentsatz an Teilchen unter 1 μm sehr viel rascher zunimmt als der Prozentsatz an Teilchen unter 0,2 μm, so wie es in der am gleichen Tage, wie vorliegende Patentanmeldung, eingereichten Patentanmeldung P 29 43 651 (DE-A-29 43 651) mit der Bezeichnung ≪ Verfahren zur Herstellung von mineralischen Füllstoffen durch Naßzerkleinerung ≫ beschrieben ist. Dieses Verfahren ist im wesentlichen dadurch gekennzeichnet, daß die Zerkleinerung ohne Dispergiermittel und bei einer Feststoffkonzentration von unter 60 Gew.-% durchgeführt wird, daß die zerkleinerte Suspension filtriert und der ca. 20% Wasser enthaltende Filterkuchen entweder getrocknet oder durch Hinzufügen eines Dispergiermittels in eine Suspension mit niedriger Viskosität übergeführt wird.

Als Beispiel für die unter die Erfindung fallenden Produkte seien natürliche Calciumcarbonate mit folgenden Eigenschaften genannt, wobei alle %-Angaben sich auf Gew.-% und alle Temperaturangaben sich auf °C beziehen:

| % < 2 μm | % < 1 μm | % < 0.2 μm | $R = \dfrac{\% < 1 \ \mu m}{\% < 0.2 \ \mu m}$ |
|---|---|---|---|
| 98% | 75 | 15 | 5,0 |
| 98% | 77 | 17 | 4,53 |
| 98% | 80 | 15 | 5,33 |

Erfindungsgemäß sind es die Werte für R zwischen 4 und 5, insbesondere in der Nähe von 5, die den besten Kompromiß zwischen dem Wirkungsgrad des Produktes und den wirtschaftlichen Herstellungsbedingungen ermöglichen.

Weitere Vorteile, Merkmale und Aufgaben der Erfindung ergeben sich aus den folgenden Ausführungsbeispielen :

1. Farben

Es werden Alkyd- und Dispersionsfarben (Acryl-Styrol) gemäß der unten angegebenen Rezepturen unter entsprechender Verwendung natürlicher Calciumcarbonate in Form von Kreide und Kalkspat mit folgenden granulometrischen Eigenschaften zubereitet:

Tabelle I

|  | % < 2 $\mu$m | % < 1 $\mu$m | % < 0.2 $\mu$m | R |
|---|---|---|---|---|
| Produkt Nr. 1*) | 99 | 90 | 31 | 2,9 |
| Produkt Nr. 2*) | 96 | 75 | 26 | 2,88 |
| Produkt Nr. 3 | 97 | 70 | 15 | 4,67 |
| Produkt Nr. 4 | 99,5 | 85 | 15 | 5,66 |

*) Vergleichsbeispiel

Nach dem Auftrag von Farbfilmen auf einen Träger und vollständiger Trocknung wird der Glanz mit Hilfe eines Goniophotometers d. h. eines Winkelmeßgeräts vom Typ GP 2 der Fa. Zeiss gemessen. Die erhaltenen Ergebnisse gehen aus der folgenden Tabelle II hervor:

Tabelle II

| Produkt R = | Nr. 1 *) 2,9 | Nr. 2 *) 2,88 | Nr. 3 4,67 | Nr. 4 5,66 |
|---|---|---|---|---|
| Dispersionsfarbe | | | | |
| - Glanz bei 60° | 5,6 | 22,9 | 33,9 | 36,9 |
| - Glanz bei 70° | 12,4 | 42,3 | 53,7 | 56,4 |
| Alkydfarbe | | | | |
| - Glanz bei 60° (nach 1 Woche) | 1,7 | 21,1 | 42,7 | 49,7 |
| Produkt R = | Nr. 1 *) 2,9 | Nr. 2 *) 2,88 | Nr. 3 4,67 | Nr. 4 5,66 |
| - Glanz bei 60° (nach 1 Monat) | 1,2 | - - 18,9 | 37,3 | 44,7 |

*) Vergleichsbeispiel

Wie aus der Tabelle hervorgeht, ergeben die verwendeten Calciumcarbonate einen um so besseren Glanz, je höher das Verhältnis R liegt.

| Dispersionsfarbe: | |
|---|---|
| Rohstoffe: | Gewichtsteile: |
| Propylenglykol | 6 |
| Natrium-polyacrylat (40%) | 0,5 |
| $TiO_2$-Rutil | 19 |
| $CaCO_3$ | 12,5 |
| $NH_4 OH$ (25%) | 0,7 |
| Acryl-Stryol-Dispersion (50%) | 50 |
| Butylenglykol | 1,5 |
| Wasser | 3 |
| Methylcellulose (10%) | 2 |
| | 95,2 |

| Satinierte Alkydfarbe: | |
|---|---|
| Rohstoffe: | Gewichtsteile: |
| Alkydharz (65%) | 240 |
| Sojalezithin | 5 |
| $TiO_2$-Rutil | 200 |
| $CaCO_3$ | 300 |
| Trocknungsmittel z. B. | |
| Caliumnaphthenat | 10 |
| Testbenzin | 93 |
| | 748 |

## 2. Streichpapiere

Es werden Streichpapiere für Offsetdruck nach folgender Formel hergestellt:

| Pigment (siehe Tabelle III): | 100 Gewichtsteile |
|---|---|
| Acryl-Styrol-Mischpolymerisat (Latex): | 12 Gewichtsteile |
| Feststoffkonzentration : | 70 % |

Diese Rezeptur einer Beschichtungsmasse wurde im Verhältnis von 16 $g/m^2$ auf einen Träger von 92 $g/m^2$ aufgetragen. Nach dem Beschichten mit einer Ziehklinge wurden die Papiere getrocknet und unter einem Druck von 19,6 $N/mm^2$ kalandriert. Als Pigment wurden natürliche Calciumcarbonate verglichen die folgende Merkmale aufwiesen :

Tabelle III

| | % Teilchen kleiner als | | | R |
|---|---|---|---|---|
| | 2 $\mu$m | 1 $\mu$m | 0,2 $\mu$m | |
| Produkt Nr. 1 *) (Kreide) | 95 | 75 | 24 | 3,12 |
| Produkt Nr. 2 *) (Kalkspat) | 93 | 62 | 17 | 3,64 |
| Produkt Nr. 3 (Kalkspat) | 93 | 77 | 16 | 4,81 |
| Produkt Nr. 4 (Kreide) | 97 | 75,5 | 15 | 5,03 |
| Produkt Nr. 5 (Kalkspat) | 99 | 81 | 13 | 6,23 |

*) Vergleichsbeispiel

Die folgende Tabelle IV zeigt den jeweils erhaltenen Glanz.

Tabelle IV

| | Nr. 1 *) R = 3,12 | Nr. 2 *) R = 3,64 | Nr. 3 R = 4,81 | Nr. 4 R = 5,03 | Nr. 5 R = 6,23 |
|---|---|---|---|---|---|
| Glanz-Mittelwert in % | 48 | 52 | 55 | 57,5 | 62,5 |

Wie aus der Tabelle hervorgeht, ist der erzielte Glanz um so höher, je höher das Verhältnis R selbst ist.

Ein weiterer wichtiger Vorteil der erfindungsgemäß hergestellten Produkte besteht in der Möglichkeit, an für die Farben und Streichpapiere verwendeten Bindemittel, wie Harzen, Latex, synthetischen Dispersionen, handelsübliche Stärke und Kasein zu sparen.

Im Fall von Streichpapier, bei dem erfindungsgemäße natürliche Calciumcarbonate verwendet sind, d. h. bei denen das Verhältnis R zwischen 4 und 5 liegt, ist beispielsweise im Vergleich zu herkömmlichen Carbonaten eine Einsparung von 1,5-2,5 Teilen an trockenem Bindemittelextrakt in Rezepturen für den Offsetdruck und von 0,5-1,5 Teilen in Rezepturen für die Heliogravur einzusparen. Dabei bleiben in jedem Fall die gleichen Hafteigenschaften erhalten.

Auch bei den halbglänzenden und glänzenden Farben auf der Basis von Alkydharzen oder auf der Basis von in Wasser verdünnbaren synthetischen Bindemitteln ermöglichen die erfindungsgemäßen Produkte eine Einsparung zwischen 10 und 20 Gew.-% an trockenem Bindemittelextrakt bei gleicher Qualität.

Zu den Vorteilen der erfindungsgemäß hergestellten Produkte gehören auch die Fließeigenschaften der Papierbeschichtungsmassen und Farben. Je niederiger das Verhältnis R ist, um so eher stellt man eine erhöhte Viskosität, die Ausbildung von Thixotropie, Eindickungen bei der Lagerung, Streifenbildung beim Beschichten von Papier usw. fest.

**Patentansprüche**

1. Verfahren zur Herstellung eines mineralischen Füllstoffs, insbesondere eines natürlichen Calciumcarbonats, für Farben und Papierbeschichtungsmassen, dadurch gekennzeichnet daß das Ausgangsmaterial durch Naßzerkleinerung ohne Dispergiermittel und bei einer Festoffkonzentration von unter 60 Gew.% so zerkleinert wird, daß das Verhältnis

$$\frac{\text{Gew.\% Teilchen} < 1 \,\mu m}{\text{Gew.\% Teilchen} < 0.2 \,\mu m} = R = 4 - 5$$

ist und daß mindestens 93 Gew.% der Teilchen kleiner als 2 $\mu$m sind und daß die zerkleinerte Suspension filtriert und der ca. 20 % Wasser enthaltende Filterkuchen entweder getrocknet oder durch Hinzufügen eines Dispergiermittels in eine Suspension mit niedriger Viskosität übergeführt wird.

2. Verfahren nach Anspruch 1, dadurch gekennzeichnet, daß der R-Wert in der Nähe von 5 liegt.

**Claims**

1. Process for the production of a mineral filler, in particular a natural calcium carbonate, for paints and paper coatings, characterised in that the raw material is comminuted by means of wet comminution without a dispersing agent and with a solid concentration of below 60 % by weight, in such a manner that the ratio is:

$$\frac{\text{\% by weight particles} < 1 \,\mu m}{\text{\% by weight particles} < 0.2 \,\mu m} = R = 4 - 5$$

and that at least 93 % by weight of the particles are smaller than 2 $\mu$m and in that the comminuted suspension is filtered and the filter cake, which contains approximately 20 % water, is either dried or converted into a suspension with low viscosity by the addition of a dispersing agent.

2. Process according to Claim 1, characterised in that the R-value is approximately 5.

**Revendications**

1. Procédé de préparation d'une matière de charge minérale, en particulier un carbonate de calcium naturel, pour peintures et masses d'enduction du papier, caractérisé en ce que l'on broie la matière de base par voie humide sans agent de dispersion et avec une concentration en matière solide inférieure à 60 % en poids, de telle manière que le rapport

$$\frac{\text{\% en poids de particules} < 1 \ \mu m}{\text{\% en poids de particules} < 0,2 \ \mu m} = R \text{ soit compris entre}$$

4 et 5, en ce qu'au moins 93 % en poids des particules sont plus petites que 2 $\mu$m et en ce que l'on filtre la suspension broyée et soit l'on sèche le gâteau de filtration contenant 20 % d'eau environ, soit on le transforme en une suspension de moindre viscosité par adjonction d'un agent de dispersion.

2. Procédé selon la revendication 1, caractérisé en ce que la valeur de R est voisine de 5.

7